# EUROPEAN PATENT APPLICATION

(11) **EP 2 690 590 A1**
(43) Date of publication of application: **29.01.2014**
(21) Application number: 12290257.0
(22) Date of filing: 26.07.2012
(51) Int. Cl.: G06Q 30/02

(54) **Anonymous loyalty program consent**

(71) Applicant: WELCOME REAL TIME, 13855 Aix en Provence Cedex 3 (FR)
(72) Inventor: Burion, Gérard, 93400 Saint-Ouen (FR)
(74) Representative: GPI & Associés

(57) **Abstract**

The invention concerns processing of an anonymous consent (Y/N), by executing automated processing steps with the aid of a computer system (1).

An authorizing step (21) in the payment transaction (T) requests authorization for a payment. When granted, this allows securing that consent is actually given anonymously by said consumer (3). If the payment transaction (T) requests authorization is granted, a payment instrument (2) is recorded in an anonymous manner as a member of the loyalty program (11).

The invention is useful in promotions, advertising, buyer profiling, customer relationship management (CRM), and rewards.

## Description

The invention belongs to the technical field of electric digital data processing. The invention processes data in order to obtain, in secure and anonymous manner, the agreement of a customer to be entered in a loyalty program.

The invention is useful for various commercial and financial purposes. Other industrial applications involve market research and analysis, promotions, advertising, buyer profiling, customer relationship management (CRM), and rewards.

The general background of the invention is first discussed.

The document EP0538888B describes a secrecy and subscription technique for enabling information that is broadcast to a large number of unspecified people, to be used solely by a specific user. That document provides for receiving transmitted coded or incomplete information, by reading decoding information from a recording medium, and by using that decoding information to allow the user to use the received information. In order to convert the information received into a usable form, reading operations cooperate with demodulating operations.

The document EP0762304B describes the management of data relating to the trading of warrants, in which a display unit has a first mask formatted as a request for specific data. Then a second mask is displayed including requested data. The requested data are then held for a predetermined time period and a transaction is performed therewith if a transaction request is input during a predetermined time period.

The document EP0792493B describes online computer services. For setting fees in an online service, a first editor enables a user to edit a data store that contains the online service. A second editor enables the user to define interactive behavior. A display format and functional features are provided by said online service; and visual objects allow access to said functional features, while a fee setting tool enables the user to set online service fees for a given entity.

More detailed background of the invention is now discussed.

Due to the Applicant's field of activity, the examples described are related to customer relation management (CRM), such as payment service CRM, such as services and loyalty programs.

In the CRM domain, studies show that more than 85% of customers are not satisfied to have for each Point-Of-Sale (POS) they frequently visit, one dedicated loyalty card, e.g. a paper flyer or an electronic / magnetic device. In 60% of payments, the customer has forgotten the convenient loyalty card. Almost 50% of customers do not remember the advantages offered by the loyalty IC cards they own.

That is why many CRM actors aim to collect information about or from the customer, so as to offer made-to-measure loyalty programs.

But collecting any personal information about the customer from a payment transaction is prohibited by law in countries like the USA, Canada, and in Europe. Besides, most of the information involved in a payment transaction between a payment instrument owned by the customer and a payment terminal in a POS (e.g. on retailer premises) is not available / usable due to security reasons.

Also, many customers are reluctant to provide personal information such as phone numbers or e-mail addresses (i.e. "electronic details"), postal addresses, date of birth, etc. A major fear when giving personal electronic details is that of receiving unpleasant quantities of advertising messages and the like. This is called "spam fear".

Also, customers are disinclined to provide personal information because that would take time in a busy schedule, for a result that is uncertain from a satisfaction point of view.

This unwillingness is also due to the fact that paying is not always viewed as a pleasurable moment, so that many people like to get it over with quickly and easily. It would be beneficial for retailers if the payment moment were more attractive.

Besides, even though e-mailing is very common and appreciated by professionals, the feedback rate is only about 2-10% when prospects are precisely targeted. But targeting of prospects is time consuming, particularly for small / medium business entities, where it is common that no more than 5-10 minutes per day can be assigned to targeting prospects or customers. Besides, most small / medium retailers do not evaluate precisely the earnings of the marketing application they have launched.

Other common obstacles are the cost of CRM programs, mainly for small / medium retailers. Complexity in selecting valuable customers is another possible weakness of some CRM programs, mainly for small / medium retailers. Difficulty in geographically localizing valuable users is another common weakness in the art, mainly for small / medium retailers. Furthermore, a long-term loyalty program is rather difficult to operate particularly for small / medium retailers.

Unlike the invention, some prior art applications do not benefit from the experience of retail service providers such as Payment Service Providers (PSP) that have vast and long-standing experience of practicing CRM, while the systems they operate collect, update and sort quantities of data that is useful in terms of marketing. At present, there are few or no PSPs offering small / medium retailers, easy-to-use, affordable and value-added CRM program services.

That said, there is thought to be great demand for a technique that would allow a customer at a POS, to act simply, quickly, and without postponing the payment transaction, to agree to be being entered anonymously into a loyalty program. Should such an anonymous agreement be based upon a preceding authorization involved in a classical payment transaction to certify the actual ownership of a payment instrument by a given customer, this would secure said agreement to be entered into a loyalty program.

Such a secured non-nominative agreement is called "consent". The consent obtained in this way without involving the customer's name (or other personal information) is called "consent". Consent is distinct from "enrollment" and also from "opt-in", as explained in further background as discussed below.

The document US2009099917 (belonging to the same applicant as the present application) describes managing rewards at the time of payment for a user having a bank chip card with a chip, during a transaction at an affiliated merchant premises. For this purpose, user application data are stored in the chip or on an external remote server. A predetermined promotional program is stored and/or validated by the merchant. When the user pays with the bank card, the chip or the remote server is interrogated to ascertain the application data relating to the card. Thus, any rewards already acquired are used or new rewards are generated as a function of the application data and of said determined promotional program, before those user application data are updated.

The document US6055573 describes a computer program for delivering targeted advertisements / incentives to consumers complying with a particular behavioral pattern. Although targeted messages are delivered after a Personal Identification Number (PIN) number is received, heavy data processing needs to be performed beforehand, e.g. for previously delivering personal identification numbers to corresponding customers.

The document US2002188509 describes implementing a loyalty program on a network-wide level. The program interacts with the retailer, but not with the card user, to propose an enrollment query, the retailer being asked to select either "yes" or "no" as a response to the query. Such an enrollment query addressed to the retailer is distinct from a "consent" requested from a payment means user, e.g. an IC payment card or a Smartphone®.

The document US2007022008 describes a card-free program provided by a merchant to a customer. When no loyalty card is available, a reference number is manually transcribed and (step 211) the membership number is input into a PIN pad set up at the POS by merchant. That input is physically performed by the merchant or the customer. That is a typical enrollment. Before enrollment through inputting the membership number, terms and conditions based upon an identified program and process are customized. In order to construct a Unique Identification Code (UIC), digits of the customer's phone number, birth date and a chosen code must be entered by the customer, before the program is identified.

The document US20080015938 describes promotions systems where after the payment authorization has been processed and payment completed, sales data are read, updated or created on an IC card.

The document US2010016570 describes enrollment and participation in a loyalty program. A payment device in the form of an IC card is evaluated to find out whether that device is eligible or not for participating, then an opt-in determines whether or not the customer wishes to join. During opt-in, the customer is prompted by the cashier or by the POS terminal to indicate whether they wish to join the loyalty program. Then, enrollment information is obtained.

In view of the above, a brief summary of the invention is given below. The invention is defined by the appended claims, in terms of a method and of a computing system.

In an example, the invention provides a method of processing an anonymous consent, the method comprising executing automated processing steps with the aid of a computer system. Said computer system includes: a payment instrument held by a customer; a payment terminal at a point of sale (POS), the payment terminal having communication means for handling a payment transaction between said payment instrument and said payment terminal; a transmission network to which said payment terminal is connected; a payment service provider mainframe to which said payment terminal is connected via said transmission network; and, at said point of sale, a customer interface connected to said payment terminal and communicating with said payment service provider mainframe. Said customer interface including display means that are perceptible by the consumer. Said customer interface including interactive means, said interactive means allowing the consumer to input data into the computer system. At least one loyalty program is defined for said point of sale in the computer system.

The method includes: a set-amount step of entering a payment amount to be paid by the customer via the payment terminal, and a transaction-initiating step of starting a corresponding payment transaction by said payment instrument held by the customer communicating with the payment terminal.

In a list-check step, the payment service provider mainframe to which said payment terminal is connected, checks whether or not the payment instrument is already listed as a member of the loyalty program.

In a proposal step, if said payment instrument is not yet listed for this point of sale, said payment service provider mainframe sends to the customer interface a consent-proposal message addressed to the customer, said consent-proposal message being presented to the customer by the display means.

In a consumer-choice step, the consumer acts via the interactive means to enter his or her personal choice in response to the consent-proposal message.

In a discarding step, if said consent-proposal message is refused by the customer, the payment transaction is completed without entering the payment instrument as a member of the loyalty program.

In an eligible-consent step, if said consent-proposal message is agreed to by the customer, the payment instrument is flagged as eligible, and the payment transaction proceeds to an authorizing step.

In said authorizing step, the payment transaction requests authorization for the transaction, which authorization may or may not be granted, the authorizing step ensuring that the consent given in said consumer-choice step was actually given by the consumer.

And in a consent-recording step, if the payment transaction authorization request is granted, the payment instrument is recorded in anonymous manner as a member of the loyalty program.

In an embodiment, the computer system includes delivery means installed in the vicinity of the consumer during execution of the method, and said consent-recording step gives rise to a consent-acknowledgement step, during which a consent-acknowledgement receipt is delivered to the customer by the delivery means.

In an example, the consent-acknowledgement receipt is chosen from: a printed paper consent-acknowledgement receipt delivered by said delivery means which include a printer; and a virtual e-receipt forwarded to said customer by said payment service provider mainframe after consent-acknowledgement receipt instructions have been received from the delivery means, these delivery means being connected to said payment service provider mainframe via said transmission network.

In an example, the consent-acknowledgement receipt is integrated with a payment-transaction receipt.

In an example, the consent-acknowledgement receipt includes a first offer communication from the loyalty program.

In an embodiment, the method includes an opt-out option step, e.g. during said consent-recording step an opt-out option address is delivered to the customer.

In an embodiment, the set-amount step is automatically entered and the transaction-initiating step involves one of: swiping a magnetic stripe of the payment instrument; manually inserting said payment instrument in the payment terminal; and the customer manually operating the payment tool, which is of the electronic handheld type and which includes contactless communication means with a compatible wireless payment terminal.

In an embodiment, the check step is operated by at least one of: said payment terminal; and / or said transmission service provider mainframe.

In an embodiment, in the proposal step, the consent-proposal message is transferred by the communication means to the payment instrument, which is of the electronic handheld type and includes alternative display means.

In an example, in the consumer-choice step, the personal choice is entered via the communication means from the payment instrument, which is of the electronic handheld type and includes alternative interactive means.

In an embodiment, the authorizing step is performed with said payment terminal, by at least one of: manual acknowledgement of a consumer signature; manual input by the consumer of a PIN code; and a validated instruction entered via the payment instrument, which is of the electronic handheld type and which includes alternative interactive means.

In an embodiment, the proposal step includes an ownership validation request to the consent-proposal message and said consumer-choice step includes a personal confirmation of ownership of the payment instrument by the consumer.

In an example, the invention provides a computer system for processing an anonymous consent, the computer system executing automated processing steps. This computer system includes: a payment instrument held by a customer; a payment terminal at a point of sale (POS), the payment terminal having communication means for handling a payment transaction between said payment instrument and said payment terminal; a transmission network to which said payment terminal is connected; a payment service provider mainframe to which said payment terminal is connected via said transmission network; and readable memory means for at least one loyalty program defined for said point of sale to be recorded in the computer system.

The computer system is dedicated to executing the above-explained method of processing an anonymous consent. The computer system includes at least: at said point of sale, a customer interface connected to the payment terminal and communicating with said payment service provider mainframe. Said customer interface including display means perceptible by the consumer. Said customer interface including interactive means, for allowing a consumer to input data in the computer system. In an embodiment, the readable memory means are located in the payment service provider mainframe and the computer system has a retailer interface at the point of sale, allowing remote entering of selective parameters in the loyalty program and for remote reporting, updating, and analysis.

In an embodiment, the computer system has a retailer interface at the point of sale, which retailer interface includes a customer interface with display means and interactive means.

After authorization is given in a conventional payment transaction, thereby certifying that a payment instrument is actually owned by a given customer, the invention relies on that certification to enable a further and distinct agreement to a loyalty program to be entered into in anonymous manner, this agreement being called "consent".

The invention is advantageous in that the time of making a payment is the most appropriate time to manage a customer relationship, given that:
- the payment is a necessary step in any purchase; and
- payment means/instruments (cards and other e-payments such as mobile payment) identify a customer with a constant identification number.

The invention makes it possible to achieve the surprising advantages of:
- tracking each customer payment in a merchant point of sale,
- scoring each customer with inventory, "recency" (i.e. the time lapsed from the previous purchase, thus defining how recent is the last payment), frequency, and cumulated purchased amount values, and
communicating customer rewards in a scheme of offers set by the merchant.

The invention is applicable to various types of point-of-sales terminals: POS, ePOS (cash machine), etc. The invention aims to develop the capacities of the equipment available at points of sale. For instance, once a group of loyal customers is identified, the retailer is able to "opt them in" after asking them at the POS if they consent to take part in a loyalty program.

The consent is not an enrollment, which is time consuming, and frequently refused by the consumer, and which requires collecting and validating a large amount of data about / from the consumer. Enrollment is not anonymous, since the data that consumers are asked to include are their names, surnames, and electronic details. Consent is not an opt-in either, since in the invention, consent is obtained and then a kind of opt-in is operated for the payment instrument, i.e. anonymously and not for the payment instrument holder, i.e. a human being.

The invention involves a computer system (also called "system environment"), having payment means owned or assigned to a human person called the user or customer. These payment means are either a payment card and / or a mobile device including payment applications. When these payment means have data transfer means capable of communicating data to a terminal, either a point-of-sale terminal (POS terminal) and / or an electronic point-of-sale terminal (ePOS terminal), some of the steps involved in obtaining consent may be performed in contactless manner and / or with the customer providing some information / requests / feed-back directly via the electronic payment instrument (e.g. a Smartphone or the like).

The POS terminal is connected for data transfer with a payment service provider mainframe (typically including both a "payment transaction processor" and a loyalty platform to which the retailer is a client). The terminal POS / ePOS are physically located on retailer premises. The interface through which the loyalty program is operated by the retailer is physically located on various premises, possibly at / in the vicinity of / or remote from the points of sale when customers are prompted to give their consent.

Although widespread, in common use, and appreciated, nowadays some technical problems remain in the loyalty technology field:
- retailers have limited possibilities for communicating with their customers about available special offers, and only after customer enrollment by collecting email addresses or phone numbers;
- this fact leads to customers feeling they are being put under pressure to accept the enrollment when visiting a merchant. Furthermore, most customers are reluctant to give their details.

Figures shown in the appended drawings are briefly described.
- Figure 1 is a schematic view of an environment where consent processing of the invention is performed, showing the consumer, payment instruments and a terminal, retailer and loyalty program interface, the various communication paths involved, and a series of platforms that designate a payment service processor.
- Figure 2 is a flowchart, illustrating the main steps of consent processing of the invention.
- Figure 3 is a schematic view of a display means where a consent proposal of the invention is presented to the customer.
- Figure 4 is a schematic view of a display means where a consent first reward of the invention is presented to the customer.

The invention is described in detail, with reference to the figures.

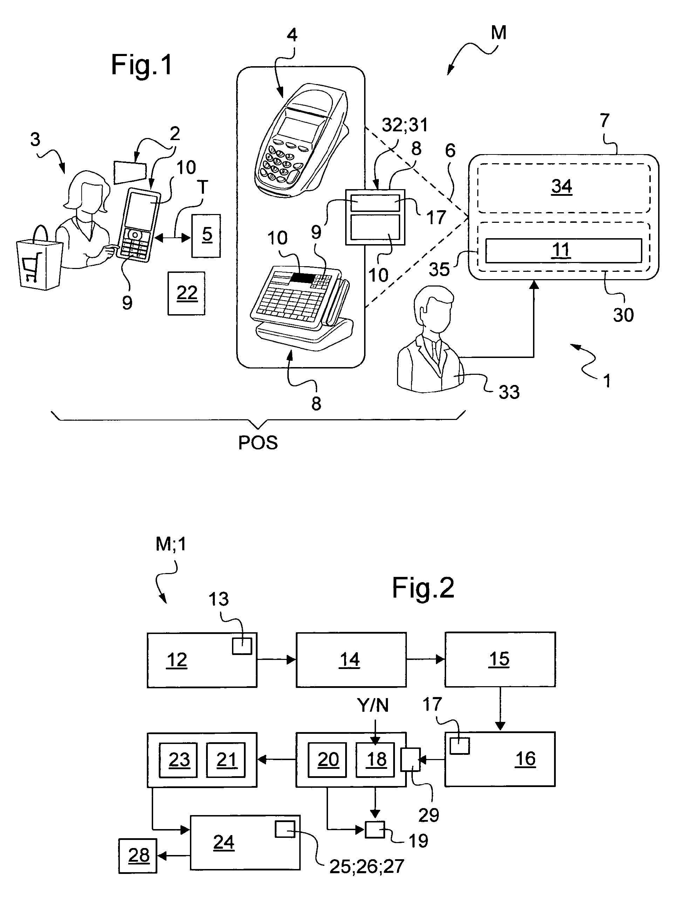

In Figure 1, it can be seen that a method M operates processing of an anonymous consent designated as "Y/N". This method M executes automated processing steps with the aid of a computer system 1.

This computer system 1 includes: a payment instrument 2 held by a customer 3. As shown in Figure 1, the method M is compatible with various types of payment instrument 2, e.g. an IC card or a Smartphone® equipped with a payment application.

Figure 1 designates a point of sale POS, in which there is installed a payment terminal 4 with communication means 5 for handling a payment transaction T between one of said payment instruments 2 and said payment terminal 4.

There can be seen a transmission network 6 to which said payment terminal is connected, and a payment service provider mainframe 7 to which said payment terminal 4 is connected via said transmission network 6.

Also at said point of sale POS, a customer interface 8 is connected to said payment terminal 4 and communicates with said payment service provider mainframe 7 for performing the transaction T.

This customer interface 8 is possibly located in a payment terminal directly, typically if this terminal is of the ePOS type, in the POS, e.g. in a computing device 32 installed in the POS, or indeed directly in the payment instrument 2, if it is of a compatible type (Smartphone®, etc.)

The customer interface 8 comprises display means 9 perceptible by the consumer 3 and interactive means 10. The interactive means 10 allow the consumer 3 to input data in the computer system 1.

At least one loyalty program 11 is defined for the point of sale POS, in the computer system 1.

With reference to Figure 2, it can be seen that - as in a usual payment transaction T- the method M includes: a set-amount step 12 of entering a payment amount 13 to be paid by the customer via the payment terminal. A transaction-initiating step 14 classically starts a corresponding payment transaction T, by putting said payment instrument 2 held by the customer 3 into communication with the payment terminal 4.

In Figure 2, the method M includes a list-check step 15, in which the payment service provider mainframe to which said payment terminal is connected checks whether or not the payment instrument is already listed as a member of the loyalty program.

A proposal step 16 is performed if said payment instrument 2 is not yet listed for this point of sale POS. In other words, the method M detects the unique ID of the payment instrument 2 in the transaction T, and verifies whether or not this unique ID is already listed in the program 11.

The payment service provider mainframe 7 communicates a consent-proposal message 17 to the customer interface 8 for the attention of the customer 2, thereby making a proposal step 16 possible. This consent-proposal message 17 is presented to the customer 3 by the display means 9.

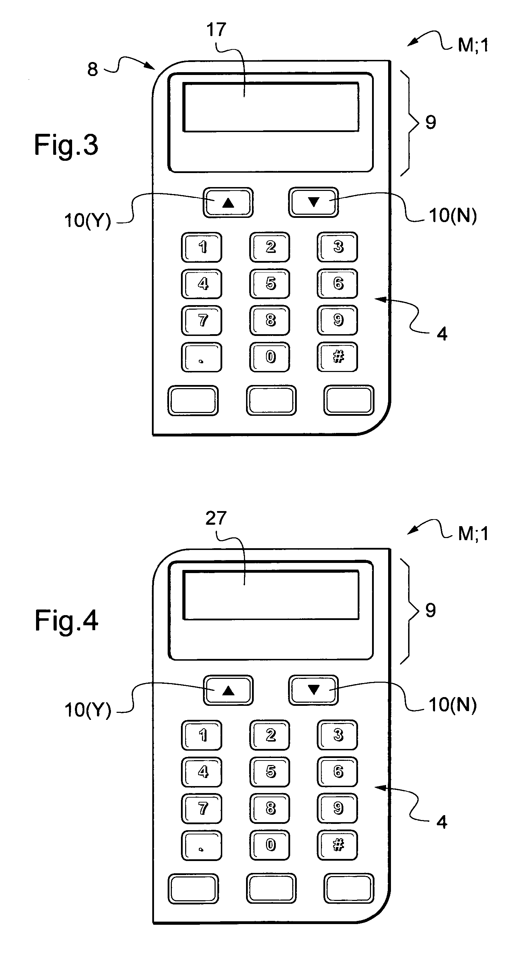

In a consumer-choice step 18, the consumer enters a personal choice "Y" or "N" via the interactive means 10 (see Figures 3-4), in response to the consent-proposal message 17.

If said consent-proposal message 17 is refused by the customer 3 then, in a discarding step 19, the payment transaction T is completed without entering the payment instrument 2 as a member of the loyalty program 11. In the event of the payment transaction not being authorized, subsequently, by the trusted authorities, or of the payment instrument 7 being removed / refused, a discarding step 19 is similarly executed.

In an eligible-consent step 20, if said consent-proposal message 17 was approved by the customer 3, the payment transaction T proceeds to an authorizing step 21 and the payment instrument is flagged as eligible. In said authorizing step 21 the payment transaction T requests authorization, and if authorization is granted, thus ensuring through the authorizing step 21 that consent was actually given by the consumer 3, that allows consent actually to be given, conveniently for the consumer 3, and in an anonymous manner.

In a consent-recording step 23, if the payment transaction request for authorization is granted, the payment instrument 2 is recorded in anonymous manner as a member of the loyalty program 11.

In an implementation of the method M, the computer system 1 includes delivery means 22 (Figure 1). Depending on context, the delivery means 22 are installed in the POS or they are incorporated in the electronic payment instrument 2. In some cases, the delivery means 22 are part of the existing terminal 4 or of a device connected thereto. In the method M, the delivery means 22 are in the vicinity of the consumer 3 during execution of the method M, and said consent-recording step 23 gives rise to a consent-acknowledgement step 24, during which a consent-acknowledgement receipt 25 is delivered to the customer by the delivery means 22.

In an implementation of the method M, the consent-acknowledgement receipt 25 is chosen from: a printed paper consent-acknowledgement receipt delivered by said delivery means 22, which then include a printer and / or a virtualized e-receipt forwarded to said customer 3 by said payment service provider mainframe 7, the delivery means 22 being connected to said payment service provider mainframe 7 via said transmission network 6.

In the implementation of Figure 2, the consent-acknowledgement receipt 25 is integrated with a payment-transaction receipt 26. In another implementation, the consent-acknowledgement receipt 25 includes a first-offer communication 27 from the loyalty program (Figure 4).

In the implementation of Figure 2, the method M includes an opt-out option step 28, e.g. during said consent-recording step 23 an opt-out option address is delivered to the customer.

In Figure 1, for an ePOS payment terminal 4, the set-amount step 12 is automatically entered and the transaction-initiating step 14 involves one of:
- swiping a magnetic stripe payment instrument 2,
- manually inserting said payment instrument 2 in the payment terminal 4; and,
- manual input (called "tap") by the consumer of the payment instrument 2, which is of the electronic handheld type and which includes contactless communication means 5 for communicating with a compatible wireless payment terminal 4.

In Figure 2, the list-check step 15 is operated by at least one of: said payment terminal 4 and / or said transmission service provider mainframe 7.

In the example of method M involving an electronic payment instrument 2, at the proposal step 16, the consent-proposal message 17 is transferred by the communication means 5 to this payment instrument 2 which is of the electronic handheld type and includes alternative display means 9. Then, in the consumer-choice step 18, the personal choice "Y/N" may optionally be entered via the communication means 5 from this electronic payment instrument 2, which includes alternative interactive means 10 for that purpose.

In the method M, the authorizing step 21 is performed with said payment terminal 4, by at least one of:
- manual acknowledgement of the consumer's signature,
- manual input by consumer of a PIN code; and
- certified instruction entered from the payment instrument 2, which is of the electronic handheld type and which includes alternative interactive means 10.

In the method M of Figure 2, the proposal step 16 includes an ownership validation request 29 with the consent-proposal message, and said consumer-choice step 18 includes personal confirmation of ownership of the payment instrument 2 by the consumer 3.

As explained above, the computer system 1 automatically processes data needed for an anonymous consent, by executing the aforementioned processing steps. The computer system 1 is dedicated to executing the method M. In Figure 1, the computer system 1 has readable memory means 30 located in the payment service provider mainframe 7 and the computer system 1 has a retailer interface 31, allowing remote entering of selected parameters in the loyalty program 11 and for remote reporting, updating and analysis. In Figure 1, the retailer interface 31 is incorporated in the computing device 32.

The computer system 1 has a retailer interface 31 at the point of sale POS, which interface includes the customer interface 8 with display means 9 and interactive means 10.

Figure 3 shows display means 9 in which a consent proposal 17 is presented to the customer 3. Figure 4 shows display means 9 in which a consent first-reward 27 is presented to the customer 3. In these embodiments, the interface 8 includes display means 9 in the form of an LCD screen, and interactive means 10 in the form of a keyboard.

For instance, the consent-proposal or "invitation" message 17 displayed reads: "Loyalty offers - Do you accept your payment means being used at this point-of-sale as secure and anonymous recognition means, giving you access to other applications? (i.e. do you accept your payment means being used, as a loyalty card) - ESC=NO / ENTER=YES".

The invention proceeds through a further step of communicating with new applications, i.e. concerning rewarding the user. For instance, if the customer is about to achieve a specific score in order to get a reward, an offer is set by the retailer in the loyalty program 11. E.g. the terminal 4 displays the statement and/or prints the statement on the receipt ticket 26. The consumer 3 achieves the expected score on the next occasion and is rewarded. E.g. the receipt with the redeemed offer shows for example, "You just got 15% off, thank you for shopping at our store".

The invention then possibly proceeds through a further step of enrolling selected users. The consumer currently paying at the point of sale POS has just achieved a score, set by the retailer, making the customer eligible for a direct relationship. The computer system notifies the customers that he/she is eligible to belong to the loyalty membership. The display means 9, e.g. on the terminal 4 read: "Do you want to become member of the merchant's loyalty club?".

If the consumer 3 agrees and confirms consent by choosing "yes", the merchant inputs the consumer's email address into the interface of the system, together with optional details depending on the merchant's rules. Optionally, the customer can enroll directly by keying in his/her mobile phone number.

In Figure 1, it can be seen that the terminal 4 in the POS is connected for data transfer to a payment service provider mainframe 7 (typically including a platform 34 for handling payment transactions, e.g. a "payment transaction processor" and also, sometimes hosted in the same facility, the loyalty platform 35 of which the retailer 33 is a client). The terminal 4 (POS / ePOS) is physically located on retailer premises. The interface through which the loyalty program 11 is controlled by the retailer is physically located on various premises, possibly at, in the vicinity of, or remote from the points of sale when customers are prompted to give their consent.

The invention proposes an alternative way to accomplish opt-in, in a manner that is anonymous and secure, at the time of payment, while recording only the payment means identifier, with this being done in secure manner. During payment, the invention communicates offers that will be applicable for future payments. The invention remains compliant with collecting customer details, depending on the customer's willingness. The invention helps in collecting customer details by notifying the retailer 33 during the payment action that the customer 3 should be enrolled in compliance with the customer's score achieved at the merchant's point of sale. The invention avoids systematically pressurizing a customer to be enrolled during a first visit. The invention may possibly be integrated with electronic payment, the customer 3 remains anonymous and is not profiled (age, socio-professional category, no electronic address or phone number), by recording only the unique ID of the payment instrument 2 used by the customer 3 for paying at a POS (via the payment terminal 4).

With the invention, the customer is automatically recognized and gratified at a POS, and is also informed about the potential rewards on future payments. The "consent" at the POS is necessary and specifically based on payment, but is distinct from this payment. The invention aims to solve the technical constraints whereby the payment processor or acquiring bank of the retailer cannot record any data about customers (e.g. cardholder data), more specifically when the bank of the retailer and bank of the customer (cardholders) are not the same.

The "consent" of the invention is dependent on payment processing. For a new customer, customer consent is requested for a first time, at the start of the electronic payment procedure (after card insertion and input of the purchase amount to the POS), and consent is recorded by the system only after payment processing has been completed and authorized (payment transaction status is accepted).

When first encountering the invention, the customer 3 causes his/her own payment means to start processing with data transfer means capable of communicating data with a terminal. Then, user consent is requested, e.g. via a consumer / terminal interface. Depending on the answer from the user (yes / no), the user answer is stored temporarily.

When the payment amount is entered, then the consent is asked to the user. Before payment validation is obtained, the application back office processing arrangement (e.g. CRM, loyalty program, etc.) is suspended. For payment validation and when required to do so by the computer, the user may enter validation input (e.g. via a PIN code). Only once the transaction has been authorized, and only if consent has been given by the user, is that consent actually recorded in the back office processing arrangement, in view of further applications. In some embodiments, the consent is memorized locally and is transferred to the back office processing arrangement, when communication (e.g. via a network) is available.

The aim of the present invention is to offer a retailer the ability to track customers at a POS exactly like a private loyalty card, but based entirely on payment instruments provided by banks. Retailers are free to deploy any system. To fulfill this aim, prior consent at the POS is necessary for enabling payment information to be recorded at the retailer's bank, even though the customers' banks might be a number of different banks. Asking a simple "consent" question greatly reduces the pressure on customers, and avoids enrollment by getting personal data.

The present invention is not dedicated to replacing enrollment methods but can work with enrollment. The system gets the customer's consent first to award points anonymously (to give the customer a score), and only suggests enrollment to this customer once a minimum score is reached. At the first visit to the retailer, the customer is invited to answer a consent question. This step can be skipped for countries without data privacy regulations. When consent is obtained and opt-in is performed, the customer's score is updated on each new payment being made at each of the retailer's point(s) of sale.

An Internet Link (www....) or phone number enables customers to read the terms & conditions of the loyalty program. Optionally, a first communication of current offers is presented to the consumer immediately after consent and opt-in.

The invention is not limited to the implementations described, and it encompasses any means equivalent to those described.

## Claims

1. Method (M) for processing an anonymous consent (Y/N), the method (M) comprising executing automated processing steps with the aid of a computer system (1); the computer system (1) including: a payment instrument (2) held by a customer (3); a payment terminal (4) at a point of sale (POS), the payment terminal having communication means (5) for handling a payment transaction (T) between said payment instrument and said payment terminal; a transmission network (6) to which said payment terminal is connected; a payment service provider mainframe (7) to which said payment terminal is connected via said transmission network (6); and, at said point of sale (POS), a customer interface (8) connected to said payment terminal and communicating with said payment service provider mainframe (7); said customer interface (8) including display means (9) that are perceptible by the consumer (3), and interactive means (10); said interactive means (10) allowing the consumer (3) to input data into the computer system (1); at least one loyalty program (11) being defined for said point of sale in the computer system (1); the method including: a set-amount step (12) of entering a payment amount (13) to be paid by the customer via the payment terminal (4), and a transaction-initiating step (14) of starting a corresponding payment transaction (T) by said payment instrument (2) held by the customer communicating with the payment terminal (4); the method (M) being
**characterized in that** it includes:
a list-check step (15) in which the payment service provider mainframe to which said payment terminal is connected checks whether or not the payment instrument is already listed as a member of the loyalty program; a proposal step (16) in which, if said payment instrument is not yet listed for this point of sale (POS), said payment service provider mainframe (7) sends to the customer interface a consent-proposal message (17) addressed to the customer, said consent-proposal message (17) being presented to the customer by the display means (9); a consumer-choice step (18) in which the consumer acts via the interactive means (10) to enter his or her personal choice in response to the consent-proposal message (17); a discarding step (19) in which, if said consent-proposal message is refused by the customer (3), the payment transaction is completed without entering the payment instrument as a member of the loyalty program (11); an eligible-consent step (20) in which, if said consent-proposal message is approved by the customer, the payment instrument is flagged as eligible and the payment transaction (T) proceeds to an authorizing step (21) in which the payment transaction (T) requests authorization for the transaction, which authorization may or may not be granted, the authorizing step (21) ensuring that the consent given in said consumer-choice step (18) was actually given by the consumer; and a consent-recording step (23) in which, if the payment transaction authorization request is granted, the payment instrument is recorded in anonymous manner as a member of the loyalty program (11).

2. Method (M) according to claim 1,
**characterized in that** the computer system (1) includes delivery means (22) installed in the vicinity of the consumer (3) during execution of the method (M), and said consent-recording step (23) gives rise to a consent-acknowledgement step (24), in which a consent-acknowledgement receipt (25) is delivered to the customer by the delivery means (22).

3. Method (M) according to claim 2,
**characterized in that** the consent-acknowledgement receipt (25) is chosen from: a printed paper consent-acknowledgement receipt delivered by said delivery means (22) which include a printer; and a virtualized e-receipt forwarded to said customer by said payment service provider mainframe (7) after consent-acknowledgement receipt instructions have been received from the delivery means, these delivery means (22) being connected to said payment service provider mainframe (7) via said transmission network (6).

4. Method (M) according to claim 2,
**characterized in that** the consent-acknowledgement receipt (25) is integrated with a payment-transaction receipt (26).

5. Method (M) according to claim 2,
**characterized in that** the consent-acknowledgement receipt (25) includes a first offer communication (27) from the loyalty program.

6. Method (M) according to claim 1,
**characterized in that** the method includes an opt-out option step (28), e.g. during said consent-recording step an opt-out option address is delivered to the customer.

7. Method (M) according to claim 1,
**characterized in that** the set-amount step (12) is automatically entered and the transaction-initiating step involves one of: swiping a magnetic stripe of a payment instrument (2); manually inserting said payment instrument (2) in the payment terminal; and the customer manually operating the payment instrument (2), which is of the electronic handheld type and which includes contactless communication means (5) with a compatible wireless payment terminal (4).

8. Method (M) according to claim 1,
**characterized in that** the list-check step (15) is operated by at least one of: said payment terminal (4); and / or said transmission service provider mainframe (7).

9. Method (M) according to claim 1,
**characterized in that** in the proposal step (16), the consent-proposal message (17) is transferred by the communication means to the payment instrument (2), which is of the electronic handheld type and includes alternative display means (9).

10. Method (M) according to claim 1,
**characterized in that** in the consumer-choice step (18), the personal choice is entered via the communication means (5) from the payment instrument (2), which is of the electronic handheld type and includes alternative interactive means (10).

11. Method (M) according to claim 1,
**characterized in that** the authorizing step (21) is performed with said payment terminal (4), by at least one of: manual acknowledgement of a consumer signature; manual input by the consumer of a PIN code; and a validated instruction entered via the payment instrument (2), which is of the electronic handheld type and which includes alternative interactive means (10).

12. Method (M) according to claim 1,
**characterized in that** the proposal step (16) includes an ownership validation request (29) to the consent-proposal message and said consumer-choice step (18) includes a personal confirmation of ownership of the payment instrument (2) by the consumer (3).

13. Computer system (1) for processing an anonymous consent, the computer system executing automated processing steps; the computer system (1) including: a payment instrument (2) held by a customer (3); a payment terminal (4) at a point of sale (POS), the payment terminal having communication means (5) for handling a payment transaction (T) between said payment instrument and said payment terminal; a transmission network (6) to which said payment terminal is connected; a payment service provider mainframe (7) to which said payment terminal is connected via said transmission network; and readable memory means (30) for at least one loyalty program (11) defined for said point of sale (POS) to be recorded in the computer system (1); the computer system (1) being
**characterized in that** it is dedicated to executing the method (M) of any one of claims 1 to 13; the computer system (1) further including at least: at said point of sale (POS), a customer interface (8) connected to the payment terminal and communicating with said payment service provider mainframe (7); said customer interface including display means (9) perceptible by the consumer; said customer interface including interactive means (10), for allowing a consumer (3) to input data in the computer system (1).

14. Computer system (1) according to claim 1
**characterized in that** the readable memory means (30) are located in the payment service provider mainframe (7) and the computer system (1) has a retailer interface (31) allowing for remote entering of selective parameters in the loyalty program (11) and for remote reporting, updating, and analysis.

15. Computer system (1) according to claim 13,
**characterized in that** the computer system (1) has a retailer interface (31) at the point of sale (POS), which retailer interface (31) includes a customer interface (8) with display means (9) and interactive means (10).
